# EUROPEAN PATENT SPECIFICATION

(11) **EP 4 452 021 B1**
(45) Date of publication and mention of the grant of the patent: **22.10.2025**
(21) Application number: 22840736.7
(22) Date of filing: 21.12.2022
(51) Int. Cl.: A47J 31/22

(54) **BEVERAGE PREPARATION WITH A FLEXIBLE OUTLET VALVE**
GETRÄNKEZUBEREITUNG MIT FLEXIBLEM AUSLASSVENTIL
PRÉPARATION DE BOISSONS AVEC UNE SOUPAPE DE SORTIE FLEXIBLE

(30) Priority: 22.12.2021 EP 21216976
(43) Date of publication of application: 30.10.2024
(73) Proprietor: Société des Produits Nestlé S.A., 1800 Vevey (CH)
(72) Inventor: FANKHAUSER, Marcel, 3125 Toffen (CH); GAVILLET, Gilles, 1670 Ursy (CH); GORTCHACOW, Miguel, 1007 Lausanne (CH); STALDER, Stefan, 3052 Zollikofen (CH)
(74) Representative: Schnyder, Frank Simon
(86) International application number: PCT/EP2022/087147
(87) International publication number: WO 2023/118246

(56) References cited:
- WO-A1-2017/068134
- WO-A1-2021/191107

## Description

### Field of the Invention

The field of the invention pertains to beverage preparation machines by centrifuging capsules containing an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any container such as a packaging for containing a pre-portioned beverage ingredient, e.g. a flavouring ingredient, the packaging forming an enclosure of any material, in particular an airtight or pervious material, porous or non-porous material, e.g. plastic, aluminium, recyclable and/or biodegradable packagings, and of any shape and structure, including soft pods or rigid cartridges for containing the ingredient.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use. Examples of such brewing devices are disclosed in EP 1 767 129, WO 2009/043630, WO 2005/004683 and WO 2007/135136. The preparation of a beverage by using centrifugation is also known. Examples of centrifugation processes and corresponding devices are disclosed in WO 2008/148601, WO2008/148650, US 5,566,605, WO 2013/007776, WO 2013/007779 and WO 2013/007780.

Irrespectively of the extraction process itself it has also been proposed to facilitate the handling of capsules by systems for extracting them, in particular by motorizing the opening and/or closure of the extraction system for inserting and/or removing a capsule. Examples of such systems are for example disclosed in EP 1 767 129, WO 2009/113035, WO 2012/025258, WO 2012/025259, WO 2012/041605, WO 2013/127476, WO 2014/096122, WO 2014/096123 and EP2015185946.9.

The preparation of a beverage by using centrifugation is also known. Such beverage preparation includes: providing a beverage (flavoring) ingredient, e.g. as powder and/or leaves, in a capsule; circulating liquid into the capsule and rotating the capsule at sufficient speed to ensure interaction of the liquid with the ingredient while creating a gradient of pressure of liquid in the capsule. Such pressure increases gradually from the centre towards the periphery of the capsule. As liquid traverses the ingredient, e.g. coffee bed, extraction of the ingredient, e.g. coffee compounds, takes place and a liquid extract is obtained that flows out at the periphery of the capsule. Examples of such systems are disclosed in WO 2008/148601, WO 2013/007776, WO 2013/007779, WO 2013/007780, WO 2017/046294, WO 2017/068134 and WO 2017/202746. WO 2021/122502 discloses a centrifugal beverage machine with a rotatable valve arrangement for controlling a flow of water towards a centrifugal beverage mixing chamber.

It has been proposed to prepare beverages by centrifugation along a horizontal axis.

WO 2015/173123 and WO 2015/173124 disclose a centrifugal brewing chamber formed between two enclosing parts that are relatively translatable between an open position and a closed position. The enclosing parts cooperate with a pair of jaws that are movable between a capsule holding position to hold a capsule between the enclosing parts in the open position and a capsule release position to release the capsule. The jaws are actuated by a first actuator and a second actuator that are activated by the enclosing parts during their the relative translation. The jaws guide a capsule into a position between the enclosing parts in the open position and immobilize the capsule thereinbetween. Then, when the enclosing parts are translated together to enclose the capsule, the jaws release the capsule so that the brewing chamber is formed about the capsule. The enclosing parts are rotated about a horizontal axis to centrifuge the capsule for preparing the beverage with the ingredient in the capsule. At the end of beverage preparation, centrifugation stops and the enclosing parts are relatively translated to the open position whereby the used capsule is allowed to drop from the enclosing parts. Then the jaws are brought back into their capsule holding position.

WO 2008/148646 and WO 2008/148650 describe a beverage preparation device wherein a flow restriction is created downstream of the receptacle, in particular a capsule, for example, by a valve which opens or enlarges under the pressure created by the centrifuged liquid leaving the receptacle. The higher the rotational speed, the more the valve opens or enlarges. The valve can be formed by a mobile restriction part of the device which is elastically urged against a rim portion of the capsule. In WO 2017/068134 the centrifugal brewing chamber is fitted with an outlet valve that can be controlled by an inertia body of the machine rotating with the centrifugal brewing chamber. The valve leads into a collector forming a crema chamber in which the beverage upon undergoing a pressure drop at the valve is refined for dispensing into a user-recipient, e.g. a cup or a mug. Such collection chamber is typically arranged around the centrifugal brewing chamber, as for example disclosed in WO 2020/201469.

### Summary of the Invention

The invention relates to a machine for preparing a beverage from at least one ingredient. Normally such beverage is then dispensed to a user, e.g. to a user-cup or user-mug.

For instance, the machine is a coffee, tea, chocolate, cacao, milk or soup preparation machine. For example, the machine is arranged for preparing within a beverage processing module that includes an ingredient holder, a beverage by passing hot or cold water or another liquid through the ingredient held in the holder, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluent liquid, e.g. water, may be mixed with such ingredient to form the beverage. Typically, a predetermined amount of beverage is formed and dispensed on user-request, which corresponds to a portion (e.g. a serving). The volume of such a serving may be in the range of 15 to 1000 ml such as 25 to 600 ml for instance 40 to 250 ml, e.g. the volume for filling a cup or mug, depending on the type of beverage. Formed and dispensed beverages may be selected from ristrettos, espressos, lungos, cappuccinos, café latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 200 ml per serving, and/or for dispensing americanos, e.g. a volume in the range of 150 to 750 ml.

An aspect of the invention relates to a machine for preparing a beverage from a flavouring ingredient in a processing cavity. Such a cavity may be configured for holding the ingredient supplied within a capsule. The beverage is prepared by mixing the ingredient with water and centrifugally driving such ingredient and water about a processing axis.

The centrifugation process for preparing a beverage is known for example from EP 2 000 062, EP 2 155 020, EP 2 152 128, WO 2008/148646, WO 2009/106175, WO 2009/106589, WO 2010/026045, WO 2010/026053, WO 2010/066736, WO 2008/148650, WO 2008/148834, WO 2010/066705, WO 2010/063644, WO 2011/023711, WO 2014/096122 or WO 2014/096123.

During beverage preparation, the processing axis may extend horizontally or at an angle thereto. Such angle may be less than 45 deg., for instance less than 30 dege.g. than 15 deg.

Typically, the machine includes one or more of the following components:
a) a fluid system in fluid communication with the flavouring ingredient during beverage preparation;
b) a thermal conditioner, such as in-line heater and/or cooler, for thermally conditioning a flow of liquid circulated to the flavouring ingredient or a batch thermal conditioner for circulating thermally conditioned liquid from the batch conditioner to the flavouring ingredient;
c) a liquid driver, such as a pump, for driving liquid to the flavouring ingredient, in particular a low pressure pump e.g. within the range of 1 to 5 bar, such as 1.5 to 3 bar;
d) a motor for driving the flavouring ingredient in rotation during beverage preparation;
e) an electric control unit, in particular comprising a printed circuit board (PCB), for receiving instructions from a user via an input user-interface and for controlling the thermal conditioner, liquid driver and motor(s); and
f) one or more sensors for sensing at least one characteristic selected from characteristics of fluid system, the thermal conditioner, the liquid driver, a liquid tank, an ingredient collector, a flow of the liquid (e.g. by a flowmeter), a pressure of the liquid and a temperature of the liquid, and for communicating such characteristic(s) to the control unit.

The abovementioned capsule may have a body containing the ingredient and a peripherally projecting flange, e.g. a body in the shape of a cup and a lid covering the mouth of the cup and extending beyond the mouth to form the peripherally projecting flange.

The capsule may have a body that is symmetric or asymmetric, conical or frusto-conical or cylindrical or spherical or hemispherical or frusto-spherical, containing the ingredient, e.g. ground coffee, tea or cacao or another beverage ingredient.

The capsule may be of the type described above under the header "field of the invention". The capsule may be a capsule that has a container-body, e.g. a generally cup-shaped or hemispherical or hemi-ellipsoidal body, having a flange to which a cover lid (or membrane) is attached, in particular sealed. Typically the capsule contains a beverage ingredient. Examples of suitable capsules are disclosed in WO 2008/148601, WO 2008/148604, WO 2008/148646, WO 2008/148650, WO 2008/148656, WO 2008/148834, WO 2011/141532, WO 2011/141535, WO 2013/072239, WO 2013/072297, WO 2013/072326, WO 2015/044400. The capsule may be of the variety commercialised by Nespresso under the brand Vertuo.

The machine has a rotatable ingredient handling system for holding and rotating about the processing axis the flavouring ingredient, e.g. contained within the abovementioned capsule, and water during centrifugation. The ingredient handling system has at least one beverage outlet and at least one water inlet for supplying the water to the flavouring ingredient.

The handling system may include a first ingredient handler and a second ingredient handler that are movable one relative to the other from:
- an ingredient transfer configuration for receiving the flavouring ingredient by the first and second capsule handlers and/or releasing such ingredient from the first and second ingredient handlers; to
- an ingredient processing configuration for centrifuging the flavouring ingredient and the water by rotation about the processing axis; and
- vice versa.

Upon processing, the ingredient, e.g. contained in a capsule, may be collected in an ingredient (or ingredient capsule) collector downstream the handling system, as for example disclosed in WO 2009/074559 or WO 2009/135869.

The machine incorporates a beverage passage, e.g. a beverage conduit, in fluid communication with the beverage outlet. The passage is configured to guide the beverage from the outlet towards a beverage dispensing outlet. For instance, the beverage passage extends along the processing axis.

The machine includes a centrifugal valve associated with the beverage passage for controlling the flow and/or the pressure of the beverage along the beverage passage. The valve is configured to increase and reduce, such as allow and interrupt, a beverage flow and/or beverage pressure (buildup and/or release) at a valve portion of the passage.

The machine has a machine frame and/or housing which is stationary when the ingredient handling system is rotated for centrifugation and which supports the ingredient handling system.

The centrifugal valve has a valve frame and, relatively movable thereto, a valve part. The latter has a first inertia body that has a first centre of inertia that is off-set relative to the processing axis to move, e.g. radially, by rotation the valve part towards a closed or opened position to control a beverage flow and/or beverage pressure along the beverage passage.

Typically the valve frame is stationary relative to the machine frame and/or housing and/or stationary relative to the beverage passage.

The valve part is actuated by a second inertia body that has a second centre of inertia that is off-set relative to the processing axis to move, e.g. radially, the valve part by rotation towards a closed or opened position, in opposition to a movement by the first inertia body. The first inertia body and the second inertia body move the valve part when the ingredient handling system is rotated at a first rotational speed and at a second speed, respectively. The first rotational speed is different to the second rotational speed.

Such a valve configuration may be used to provide a non-linear control of beverage flow and/or beverage pressure by the valve relative to the rotational speed.

Such configuration permits to obtain tailored flow and/or pressure profiles.

For example, the valve may be completely open at low rotational speed, e.g. to easily drain beverage from the cavity, e.g. from the capsule, and/or extract coffee at substantially no pressure therein (above ambient pressure) and/or maximal flow. At high speed, the valve may be used to pressurize the cavity, e.g. capsule, and/or reduce the beverage flow out thereof. At very high speed, the flow maybe maximised and/or the pressure minimised to empty the cavity, e.g. capsule, of beverage for instance before disposal of the used ingredient.

By providing tailored flow and/or pressure profiles, the machine may be able to carry out different beverage preparation recipes, e.g. for extracting different kinds of roast and ground coffees and/or blends thereof.

The valve along the beverage passage can be used to control the quantity of water in the processing cavity, especially in the capsule when the ingredient is supplied with a capsule.

The valve along the beverage passage may thus be used to control the flow and/or pressure in the ingredient, especially when contained in a capsule.

The valve part may extend substantially annularly around the processing axis and/or substantially radially, e.g. diametrally, relative to the processing axis.

The valve part can be configured to rotate about the processing axis during centrifugation, the valve part being e.g. angularly fixed relative to the rotatable ingredient handling system about the processing axis.

The valve part can be movable axially relative to the processing axis to control the beverage flow and/or beverage pressure. For example, such axial movement results from an inclined orientation of a motion path of valve part relative to the processing axis and/or from an (e.g. electromagnetic) actuator actuating the valve part in an axial direction.

The valve part may be connected to at least one return spring, such as a helicoidal spring, to move the valve part into a spring-release position. For instance, the valve part is connected to a first spring and to a second spring that move the valve part at different control phases. For example, the first spring and the second spring move the valve part when the ingredient handling system is rotated at a first rotational speed and at a second speed, respectively, the first rotational speed being different to the second rotational speed.

The first inertia body can be connected to a first pre-constrained return spring and the second inertia body can be connected to a second pre-constrained return spring, e.g. by a connecting element, the first and second inertia bodies moving radially to further constrain the first and second return springs, respectively, when the ingredient handling system is rotated at a first and a second rotational speed, respectively, the first rotational speed being different to the second rotational speed.

The valve part can be actuated by an electro-actuator, such as by a solenoid, to move the valve part, e.g. a magnetic valve part, towards a closed or opened position, such as to move the valve part axially relative to the processing axis.

The valve may extend diametrally and/or annularly relative to the processing axis. For instance, the valve extends substantially along a direction and/or plan that is substantially orthogonal to the processing axis and/or having a centre of gravity that is located substantially on or at the processing axis. For example the valve has a gravity axis that is substantially colinear with the processing axis.

The frame and/or housing may include or be fixed to a bottom configured to rest on a support surface external to such machine when the ingredient handling system is rotated about the processing axis for centrifugation, e.g. an external support surface formed by a table top, the processing axis being at an angle relative to such bottom in the range of 0° to 80°, for instance of 0° to 45°, such as of 0° to 30°, e.g. of 0° to 15°, typically of substantially 0°.

The frame and/or housing can supports a motor that is connected to the ingredient handling system, for instance connected directly or via a transmission such as at least one of belts e.g. toothed belts, gears e.g. spur gears, and connecting rods.

The processing cavity may have one or more capsule openers, such as capsule piercers, associated with one or more of the beverage outlet(s) and the water inlet(s).

The processing cavity can have a plurality of beverage outlets peripherally arranged at the processing cavity about the central processing axis.

The processing cavity may have the water inlet located at the processing cavity on or adjacent to the processing axis.

The valve part may displace a gate to increase and reduce, such as allow and interrupt, the beverage flow at a valve portion of the passage. For instance, the valve portion has a section that can be sealed off by the gate.

The water inlet may be fluidically connected via an upstream water conduit to a water source e.g. to a water tank or a water distribution network.

The water conduit may extend at least in part along the processing axis, e.g. concentrically or adjacently therealong.

The beverage passage and a or the above water conduit leading to the above at least one water inlet may extend adjacently one to another or extend one within the other e.g. concentrically. The beverage passage may surround the water conduit or vice versa.

Typically the water conduit can be associated with at least one of: a water source e.g. a water tank or connection to a water network; a water thermal conditioner, e.g. a heater and/or a cooler, and optionally, the below mentioned beverage conditioner by being fixed thereto or integral therewith; a water driver e.g. a pump; and a sensor for sensing a characteristic of the water e.g. a flow sensor and/or a temperature sensor and/or a pressure sensor.

The machine may include a beverage conditioner delimiting a conditioning cavity, e.g. between two surfaces that are movable relatively to one another e.g. rotatably movable, the conditioning cavity being fluidically connected with the beverage passage. The conditioning cavity can be configured to refine the beverage supplied from the beverage outlet via the beverage passage.

The conditioning cavity may include at least one surface, such as an inner surface, that is driven with the ingredient handling system when rotated for centrifugation. Such at least one surface is for example driven in rotation about the processing axis.

For instance, when the beverage supplied from the outlet includes a gas (e.g. air), the beverage conditioner may be configured to refine the mixing, e.g. dispersion, of the gas in the beverage, e.g. to improve the quality of a beverage-gas emulsification. When the beverage is coffee, then the conditioner may be configured to refine the coffee crema.

Typically the beverage conditioner leads to a downstream beverage dispenser configured to dispense the beverage to a user receptacle, e.g. a cup or mug.

The valve may be fluidically located between the beverage outlet and the conditioning cavity.

The conditioning cavity can be at least partly off-set relative to the processing cavity along the processing axis, optionally off-set by a distance of at least 25% of a total axial length of the conditioning cavity, such as at least 50% of the axial length, for instance at least 75% of the axial length. For example, the conditioning cavity is entirely off-set relative to the processing cavity, e.g. relative to the rotatable ingredient handling system, along the processing axis.

The beverage conditioner may include an overflow cavity that is in fluid communication with the conditioning cavity for storing beverage prior to its conditioning when the conditioning cavity is full with beverage that is being conditioned.

The overflow cavity may extend from the conditioning cavity towards the processing axis to a distance therefrom that is less than 75%, such as less than 60%, for instance less than 40%, e.g. less than 25%, of a distance spacing the conditioning cavity from the processing axis.

The beverage exit passage can be connected to the conditioning cavity at a level corresponding to a top of the overflow cavity or thereabove.

The processing cavity may extend about the processing axis up to a maximum processing distance from the processing axis.. The conditioning cavity may extend about the processing axis up to a maximum conditioning distance from the processing axis. The conditioning distance may be equal to or smaller than the processing distance. For instance, the conditioning distance is in the range of 50 to 100% of the processing distance, such as at least 75%, e.g. at least 85%, for example at least 90% of the processing distance.

The conditioning cavity can be delimited by an outermost substantially cylindrical surface and/or an inner substantially cylindrical surface.

For instance, such outermost and such inner substantially cylindrical surfaces are combined to rotate one surface relative to the other surface about the processing axis during centrifugation.

Such one surface, e.g. the outermost surface, may be stationary relative to the machine frame and/or housing and such other surface, e.g. the inner surface, may be rotatable with the rotatable ingredient handling system during centrifugation. For instance, such other surface is angularly fixed to the ingredient handling system during centrifugation.

The outermost and inner substantially cylindrical surfaces can be sufficiently close one to the other to generate a sheering effect in the beverage contained in the conditioning cavity, such as a couette flow, Taylor flow, Vortex flow or turbulent flow.

The outermost and inner surfaces can be spaced apart by a distance of less than 5 mm, such as less than 3 mm, e.g. less than 2 mm.

The invention also relates to a system comprising a machine as described above and such capsule containing the flavouring ingredient.

Another aspect of the invention concerns a method of preparing in the above described machine the abovementioned beverage from the flavouring ingredient supplied within the abovementioned capsule into the machine. The method comprises the steps of:
- holding and rotating the capsule with the ingredient handling system;
- feeding the water via the water inlet into the capsule in the processing cavity and centrifuging the ingredient with the water and forming the beverage;
- releasing the beverage from the capsule via the beverage passage; and
- controlling the flow and/or the pressure from the capsule of the beverage along the beverage passage by the valve having the valve frame and, relatively movable thereto, the valve part, such valve part having the first inertia body that has the first centre of inertia that is off-set relative to the processing axis to move, e.g. radially, by rotation the valve part towards a closed or opened position to control a beverage flow and/or beverage pressure along the beverage passage, the valve part being actuated by the second inertia body that has a second centre of inertia that is off-set relative to the processing axis to move, e.g. radially, the valve part by rotation towards a closed or opened position, e.g. in opposition to a movement by the first inertia body, the first inertia body and the second inertia body moving the valve part when the ingredient handling system is rotated at a first rotational speed and at a second speed, respectively, the first rotational speed being different to the second rotational speed.

A further aspect of the invention relates to the use of a capsule as the abovementioned capsule for: a machine as described above; implementing the system as described above; or carrying out the method as described above.

The capsule may be used to perform the abovementioned steps.

### Brief Description of the Drawings

The invention will now be described with reference to the schematic drawings, wherein:
- Figure 1 is a cross-sectional side view of part of a machine that has a centrifugal processing cavity and a valve according to the invention;
- Figure 2 is a partly cut-away perspective view of the centrifugal processing cavity and the valve shown in Fig. 1;
- Figure 3 is a perspective view of part of the machine shown in Fig. 1;
- Figure 4 is a perspective view a centrifugal valve suitable to be used as the above mentioned valve of the machine shown in Fig. 1;

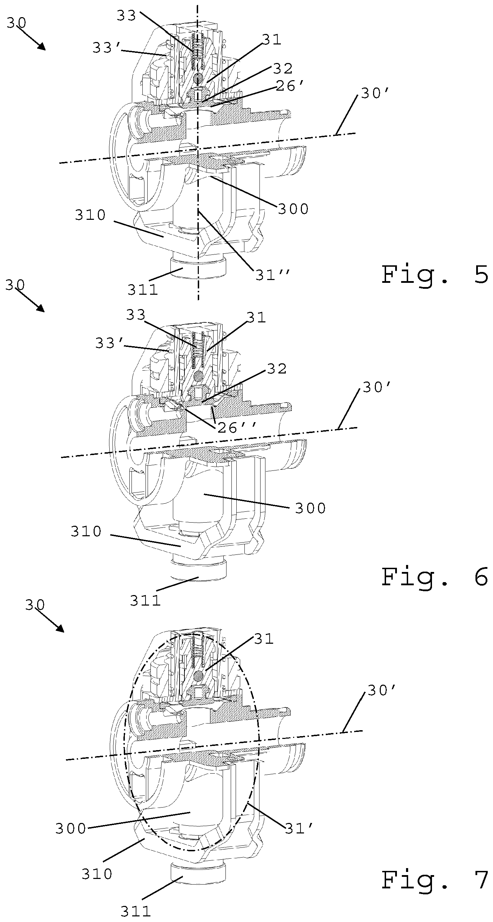

- Figure 5 is a perspective view of the valve, shown in Fig. 4, partly cut away, in a resting open position when the valve is stationary about the processing axis;
- Figure 6 is a perspective view of the valve, shown in Fig. 4, partly cut away, in a closed position when the valve is rotated about the processing axis at a first speed; and
- Figure 7 is a perspective view of the valve, shown in Fig. 4, partly cut away, in an open position when the valve is rotated about the processing axis at a second speed.

### Detailed description

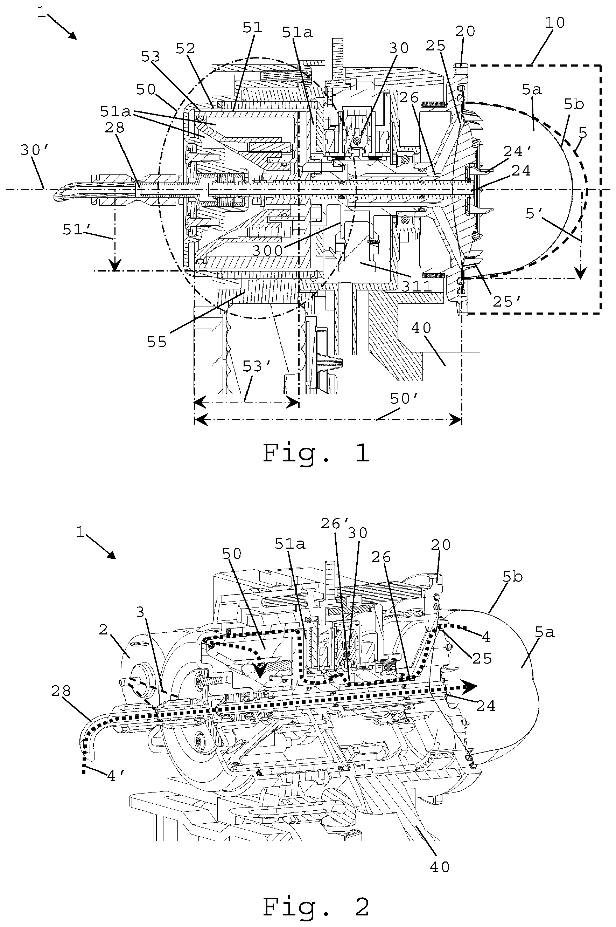

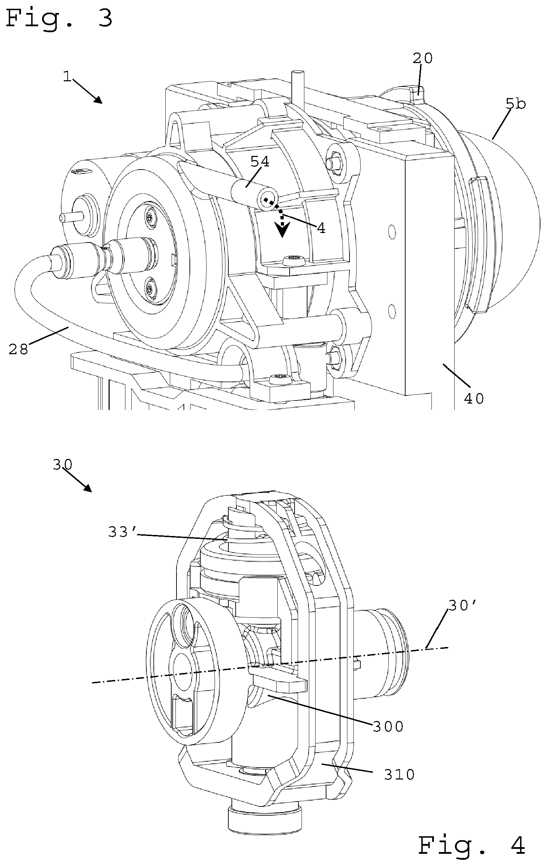

Figures 1 to 3 illustrate an exemplary embodiment of a machine 1 in accordance with the invention.

Machine 1 is configured for preparing a beverage 4 from a flavouring ingredient 5a in a processing cavity 5, such as a cavity 5 for holding ingredient 5a supplied within a capsule 5b, by mixing ingredient 5a with water 4' and centrifugally driving such ingredient 5a and water 4' about a processing axis 30' to form beverage 4.

Machine 1 includes a rotatable ingredient handling system 10,20 for holding and rotating flavouring ingredient 5a and water during centrifugation about processing axis 30'. Ingredient handling system 10,20 has at least one beverage outlet 25 and at least one water inlet 24 for supplying water 4' to ingredient 5a.

System 10,20 may include a first ingredient handler 10 and a second ingredient handler 20 that are movable one relative to the other from:
- an ingredient transfer configuration for receiving ingredient 5a by first and second capsule handlers 10,20 and/or releasing ingredient 5a from first and second ingredient handlers 10,20; to
- an ingredient processing configuration for centrifuging ingredient 5a and water 4' by rotation about processing axis 30'; and
- vice versa.

Machine 1 has a beverage passage 26, e.g. a beverage conduit, in fluid communication with beverage outlet 25. Such passage 26 can be configured to guide beverage 4 from outlet 25 towards a beverage dispensing outlet 54.

Beverage passage 26 may extend along processing axis 30'.

Machine 1 includes a centrifugal valve 30 associated with beverage passage 26 for controlling the flow and/or the pressure of beverage 4 along beverage passage 26. Valve 30 is configured to increase and reduce, such as allow and interrupt, a beverage flow and/or beverage pressure at a valve portion 26' of passage 26.

Machine 1 has a machine frame and/or housing 40 which is stationary when ingredient handling system 10,20 is rotated for centrifugation and which supports ingredient handling system 10,20.

Valve 30 has a valve frame 300 and, relatively movable thereto, a valve part 31,310,311. The latter has a first inertia body 31 that has a first centre of inertia that is off-set relative to processing axis 30' to move, e.g. radially, by rotation valve part 31,310,311 towards a closed or opened position to control a beverage flow and/or beverage pressure along beverage passage 26.

Valve part 31,310,311 is actuated by a second inertia body 310,311 that has a second centre of inertia that is off-set relative to processing axis 30' to move, e.g. radially, valve part 31,310,311 by rotation towards a closed or opened position, e.g. in opposition to a movement by first inertia body 31. First inertia body 31 and second inertia body 310,311 move valve part 31,310,311 when ingredient handling system 10,20 is rotated at a first rotational speed and at a second speed, respectively. The first rotational speed is different to the second rotational speed.

Valve part 31,310,311 may extend substantially annularly 31' around processing axis 30' and/or substantially radially 31'', e.g. diametrally, relative to processing axis 30'.

Valve part 31,310,311 may be configured to rotate about processing axis 30' during centrifugation. For example, valve part 31,310,311 is angularly fixed to rotatable ingredient handling system 10,20 about processing axis 30'.

The valve part may move axially relative to processing axis to control the beverage flow and/or beverage pressure.

Valve part 31,310,311 may be connected to at least one return spring 33,33', such as a helicoidal spring, to move valve part 31,310,311,31a into a spring-release position.

First inertia body 31 may be connected to a first pre-constrained return spring 33 and second inertia body 311 can be connected to a second pre-constrained return spring 33', e.g. by a connecting element 310. First and second inertia bodies 31,311 may move, e.g. radially, to further constrain first and second return springs 33,33', respectively, when ingredient handling system 10,20 is rotated at a first and a second rotational speed, respectively. The first rotational speed may be different to the second rotational speed.

Valve 30 may extend diametrally and/or annularly relative to processing axis 30'. Valve 30 can extend substantially along a direction and/or plan that is substantially orthogonal to processing axis 30'. Valve 30 can have a centre of gravity that is located substantially on or at processing axis 30'.

Valve 30 may have a gravity axis that is substantially colinear with processing axis 30'.

Machine frame and/or housing 40 may include or be fixed to a bottom configured to rest on a support surface external to such machine 1 when ingredient handling system 10,20 is rotated about processing axis 30' for centrifugation, e.g. an external support surface formed by a table top. Processing axis 30' can be at an angle relative to such bottom in the range of 0° to 80°, for instance of 0° to 45°, such as of 0° to 30°, e.g. of 0° to 15°, typically of substantially 0°.

Machine frame and/or housing 40 can support a motor 2 that is connected to ingredient handling system 10,20, for instance connected directly or via a transmission 3 such as at least one of belts e.g. toothed belts, gears e.g. spur gears, and connecting rods.

Processing cavity 5 may have one or more capsule openers 24',25', such as capsule piercers 24',25', associated with one or more of beverage outlet(s) 25 and water inlet(s) 24.

Processing cavity 5 can have a plurality of beverage outlets 25 peripherally arranged at processing cavity 5 about central processing axis 30'.

Processing cavity 5 may have water inlet 24 located at cavity 5 on or adjacent to processing axis 30'.

Valve part 31,310,311 may displace a gate 32 to increase and reduce, such as allow and interrupt, the beverage flow and/or beverage pressure at a valve portion 26' of passage 26. For instance, valve portion 26' has a section 26'' that can be sealed off by gate 32.

Beverage passage 26 and a water conduit 28 leading to at least one water inlet 24 may extend adjacently one to another or extend one within the other e.g. concentrically. Beverage passage 26 may surround water conduit 28 or vice versa.

Water conduit 28 can be associated with at least one of a water source, a thermal conditioner 55, a water driver, and a sensor for sensing a characteristic of water 4'.

Machine 1 may include a beverage conditioner 50 delimiting a conditioning cavity 51, e.g. between two surfaces 52,53 that are movable relatively to one another e.g. rotatably movable. Conditioning cavity 51 may be fluidically connected with beverage passage 26. Conditioning cavity 51 can be configured to refine beverage 4 supplied from beverage outlet 25 via beverage passage 26.

Conditioner 50 may be connected and in (direct) thermal communication with a or the abovementioned thermal conditioner 55 to thermally condition cavity 51.

Valve 30 may be fluidically located between beverage outlet 25 and conditioning cavity 51.

Conditioning cavity 51 can be at least partly off-set relative to processing cavity 5 along processing axis 30', optionally off-set by a distance 50' of at least 25% of a total axial length 53' of conditioning cavity 51, such as at least 50% of the axial length, for instance at least 75% of the axial length, e.g. conditioning cavity 51 being entirely off-set relative to processing cavity 5 along processing axis 30'.

Processing cavity 5 may extend about processing axis 30' up to a maximum processing distance 5' from processing axis 30'. Conditioning cavity 51 can extend about processing axis 30' up to a maximum conditioning distance 51' from processing axis 30'. Conditioning distance 51' can be equal to or smaller than processing distance 5'. For example conditioning distance 51' is in the range of 50 to 100% of processing distance 5', such as at least 75%, e.g. at least 85%, for example at least 90% of processing distance 5'.

Conditioning cavity 51 can be entirely off-set relative to processing cavity 5 along processing axis 30'. For example, beverage conditioner 50 is entirely off-set relative to rotatable ingredient handling system 10,20.

Beverage conditioner 50 may include an overflow cavity 51a that is in fluid communication with conditioning cavity 51 for storing beverage 4 prior to its conditioning when conditioning cavity 51 is full with beverage 4 that is being conditioned.

Overflow cavity 51a can extend from conditioning cavity 51 towards processing axis 30' to a distance therefrom that is less than 75%, such as less than 60%, for instance less than 40%, e.g. less than 25%, of a distance spacing conditioning cavity 51 from processing axis 30'.

Beverage exit passage 54 may be connected to conditioning cavity 51 at a level corresponding to a top of overflow cavity 51a or thereabove.

Conditioning cavity 51 may be delimited by an outermost substantially cylindrical surface 52 and/or an inner substantially cylindrical surface 53.

For example, machine 1 includes such outermost and inner substantially cylindrical surfaces 52,53 that are rotatable one surface 53 relative to the other surface 52 about processing axis 30' during centrifugation.

This one surface 52, such as outermost surface 52, may be stationary relative to machine frame and/or housing 40 and this other surface 53, such as inner surface 53, may be e.g. angularly fixed to the ingredient handling system 10,20 during centrifugation.

Outermost and inner substantially cylindrical surfaces 52,53 can be sufficiently close one to the other to generate a sheering effect in beverage 4 contained in conditioning cavity 51, such as a couette flow, Taylor flow, Vortex flow or turbulent flow.

Outermost and inner surfaces 52,53 may be spaced apart by a distance of less than 5 mm, such as less than 3 mm, e.g. less than 2 mm.

## Claims

1. A machine (1) for preparing a beverage (4) from a flavouring ingredient (5a) in a processing cavity (5), such as a cavity (5) for holding said ingredient (5a) supplied within a capsule (5b), by mixing said ingredient (5a) with water (4') and centrifugally driving such ingredient (5a) and said water (4') about a processing axis (30') to form said beverage (4), such machine (1) comprising:
- a rotatable ingredient handling system (10,20) for holding and rotating said flavouring ingredient (5a) and water during centrifugation about the processing axis (30'), the ingredient handling system (10,20) having at least one beverage outlet (25) and at least one water inlet (24) for supplying said water (4') to said ingredient (5a), optionally the system (10,20) having a first ingredient handler (10) and a second ingredient handler (20) that are movable one relative to the other from:
- an ingredient transfer configuration for receiving said ingredient (5a) by the first and second capsule handlers (10,20) and/or releasing said ingredient (5a) from the first and second ingredient handlers (10,20); to
- an ingredient processing configuration for centrifuging said ingredient (5a) and water by rotation about the processing axis (30'); and
- vice versa;
- a beverage passage (26), e.g. a beverage conduit, in fluid communication with the beverage outlet (25), the passage (26) being configured to guide said beverage (4) from the outlet (25) towards a beverage dispensing outlet (54), optionally the beverage passage (26) extending along the processing axis (30');
- a centrifugal valve (30) associated with the beverage passage (26) for controlling the flow and/or the pressure of said beverage (4) along the beverage passage (26), the valve (30) being configured to increase and reduce, such as allow and interrupt, a beverage flow and/or beverage pressure at a valve portion (26') of the passage (26); and
- a machine frame and/or housing (40) which is stationary when the ingredient handling system (10,20) is rotated for centrifugation and which supports the ingredient handling system (10,20),
the centrifugal valve (30) having a valve frame (300) and, relatively movable thereto, a valve part (31,310,311), the valve part (31,310,311) having a first inertia body (31) that has a first centre of inertia that is off-set relative to the processing axis (30') to move, e.g. radially, by rotation the valve part (31,310,311) towards a closed or opened position to control a beverage flow and/or beverage pressure along the beverage passage (26),
**characterised in that** the valve part (31,310,311) is actuated by a second inertia body (310,311) that has a second centre of inertia that is off-set relative to the processing axis (30') to move, e.g. radially, the valve part (31,310,311) by rotation towards a closed or opened position, in opposition to a movement by the first inertia body (31), the first inertia body (31) and the second inertia body (310,311) moving the valve part (31,310,311) when the ingredient handling system (10,20) is rotated at a first rotational speed and at a second speed, respectively, the first rotational speed being different to the second rotational speed.

2. The machine of claim 1, wherein the valve part (31,310,311) extends substantially annularly (31') around the processing axis (30') and/or substantially radially (31''), e.g. diametrally, relative to the processing axis (30').

3. The machine of claim 1 or 2, wherein the valve part (31,310,311) is configured to rotate about the processing axis (30') during centrifugation, the valve part (31,310,311) being optionally angularly fixed to the rotatable ingredient handling system (10,20) about the processing axis (30').

4. The machine of any preceding claim, wherein the valve part is movable axially relative to the processing axis to control said beverage flow and/or beverage pressure.

5. The machine of any preceding claim, wherein the valve part (31,310,311) is connected to at least one return spring (33,33'), such as a helicoidal spring, to move the valve part (31,310,311) into a spring-release position, optionally the first inertia body (31) being connected to a first pre-constrained return spring (33) and the second inertia body (311) being connected to a second pre-constrained return spring (33'), e.g. by a connecting element (310), the first and second inertia bodies (31,311) moving, e.g. radially, to further constrain the first and second return springs (33,33'), respectively, when the ingredient handling system (10,20) is rotated at a first and a second rotational speed, respectively, the first rotational speed being different to the second rotational speed.

6. The machine of any preceding claim, wherein the valve (30) extends diametrally and/or annularly relative to the processing axis (30'), optionally the valve (30) extending substantially along a direction and/or plan that is substantially orthogonal to the processing axis (30') and/or having a centre of gravity that is located substantially on or at the processing axis (30'), for instance the valve (30) having a gravity axis that is substantially colinear with the processing axis (30').

7. The machine of any preceding claim, wherein the frame and/or housing (40):
- comprises or is fixed to a bottom configured to rest on a support surface external to such machine (1) when the ingredient handling system (10,20) is rotated about the processing axis (30') for centrifugation, e.g. an external support surface formed by a table top, the processing axis (30') being at an angle relative to such bottom in the range of 0° to 80°, for instance of 0° to 45°, such as of 0° to 30°, e.g. of 0° to 15°, typically of substantially 0°; and/or
- supports a motor (2) that is connected to the ingredient handling system (10,20), for instance connected directly or via a transmission (3) such as at least one of belts e.g. toothed belts, gears e.g. spur gears, and connecting rods.

8. The machine of any preceding claim, wherein the processing cavity (5) has at least one of:
- one or more capsule openers (24',25'), such as capsule piercers (24',25'), associated with one or more of the beverage outlet(s) (25) and the water inlet(s) (24);
- a plurality of beverage outlets (25) peripherally arranged at the processing cavity (5) about the central processing axis (30'); and
- the water inlet (24) located at the processing cavity (5) on or adjacent to the processing axis (30').

9. The machine of any preceding claim, wherein the valve part (31,310,311) displaces a gate (32) to increase and reduce, such as allow and interrupt, said beverage flow and/or beverage pressure at a valve portion (26') of the passage (26), optionally the valve portion (26') having a section (26'') that can be sealed off by the gate (32).

10. The machine of any preceding claim, wherein the beverage passage (26) and a water conduit (28) leading to said at least one water inlet (24) extend adjacently one to another or extend one within the other e.g. concentrically, the beverage passage (26) optionally surrounding the water conduit (28) or vice versa, typically the water conduit (28) being associated with at least one of a water source, a thermal conditioner (55), a water driver, and a sensor for sensing a characteristic of said water (4').

11. The machine of any preceding claim, which comprises a beverage conditioner (50) delimiting a conditioning cavity (51), e.g. between two surfaces (52,53) that are movable relatively to one another e.g. rotatably movable, the conditioning cavity (51) being fluidically connected with the beverage passage (26), the conditioning cavity (51) being configured to refine said beverage (4) supplied from the beverage outlet (25) via the beverage passage (26), the valve (30) being for instance fluidically located between the beverage outlet (25) and the conditioning cavity (51).

12. The machine of claim 11, wherein the conditioning cavity (51) is at least partly off-set relative to the processing cavity (5) along the processing axis (30'), optionally off-set by a distance (50') of at least 25% of a total axial length (53') of the conditioning cavity (51), such as at least 50% of the axial length, for instance at least 75% of the axial length, e.g. the conditioning cavity (51) being entirely off-set relative to the processing cavity (5) along the processing axis (30').

13. A system comprising a machine (1) as defined in any preceding claim and said capsule (5b) containing said flavouring ingredient (5a).

14. A method of preparing in a machine (1), as defined in any one of claim 1 to 12, said beverage (4) from said flavouring ingredient (5a) supplied within said capsule (5b) into the machine (1), the method comprising:
- holding and rotating the capsule (5b) with said handling system (10,20);
- feeding said water (4') via the water inlet (24) into said capsule (5b) in the processing cavity (5) and centrifuging the flavouring ingredient (5a) with the water (4') and forming said beverage (4);
- releasing the beverage (4) from said capsule (5b) via the beverage passage (26); and
- controlling the flow and/or the pressure from said capsule (5b) of said beverage (4) along the beverage passage (26) by the valve (30) having the valve frame (300) and, relatively movable thereto, the valve part (31,310,311), the valve part (31,310,311) having the first inertia body (31) that has the first centre of inertia that is off-set relative to the processing axis (30') to move, e.g. radially, by rotation the valve part (31,310,311) towards a closed or opened position to control a beverage flow and/or beverage pressure along the beverage passage (26), the valve part (31,310,311) being actuated by the second inertia body (310,311) that has a second centre of inertia that is off-set relative to the processing axis (30') to move, **e.g.** radially, the valve part (31,310,311) by rotation towards a closed or opened position, **e.g. in** opposition to a movement by the first inertia body (31), the first inertia body (31) and the second inertia body (310,311) moving the valve part (31,310,311) when the ingredient handling system (10,20) is rotated at a first rotational speed and at a second speed, respectively, the first rotational speed being different to the second rotational speed.

15. A use of a capsule as said capsule (5b) for:
- a machine as defined in any one of claims 1 to 12;
- implementing the system as defined in claim 13; or
- carrying out the method of claim 14,
wherein said capsule (5b):
- is held and rotated with said handling system (10,20);
- is fed with said water (4') via the water inlet (24) into and centrifuged with the water (4') so as to form said beverage (4); and
- releases the beverage (4) from said capsule (5b) via the beverage passage (26);
- the flow and/or the pressure from said capsule (5b) of said beverage (4) being controlled along the beverage passage (26) by the valve (30) having the valve frame (300) and, relatively movable thereto, the valve part (31,310,311), the valve part (31,310,311) having the first inertia body (31) that has the first centre of inertia that is off-set relative to the processing axis (30') to move, e.g. radially, by rotation the valve part (31,310,311) towards a closed or opened position to control a beverage flow and/or beverage pressure along the beverage passage (26), the valve part (31,310,311) being actuated by the second inertia body (310,311) that has a second centre of inertia that is off-set relative to the processing axis (30') to move, e.g. radially, the valve part (31,310,311) by rotation towards a closed or opened position, e.g. in opposition to a movement by the first inertia body (31), the first inertia body (31) and the second inertia body (310,311) moving the valve part (31,310,311) when the ingredient handling system (10,20) is rotated at a first rotational speed and at a second speed, respectively, the first rotational speed being different to the second rotational speed.

## Patentansprüche

1. Maschine (1) zum Zubereiten eines Getränks (4) aus einer Geschmackszutat (5a) in einem Verarbeitungshohlraum (5), wie einem Hohlraum (5) zum Halten der Zutat (5a), die innerhalb einer Kapsel (5b) bereitgestellt ist, durch Mischen der Zutat (5a) mit Wasser (4') und zentrifugales Antreiben dieser Zutat (5a) und des Wassers (4') um eine Verarbeitungsachse (30'), um das Getränk (4) auszubilden, diese Maschine (1) umfassend:
- ein drehbares Zutatenhandhabungssystem (10,20) zum Halten und Drehen der Geschmackszutat (5a) und des Wassers während der Zentrifugation um die Verarbeitungsachse (30'), wobei das Zutatenhandhabungssystem (10,20) mindestens einen Getränkeauslass (25) und mindestens einen Wassereinlass (24) zum Bereitstellen des Wassers (4') zu der Zutat (5a) aufweist, wobei das System (10,20) optional eine erste Zutatenhandhabungsvorrichtung (10) und eine zweite Zutatenhandhabungsvorrichtung (20) aufweist, die relativ zueinander beweglich sind von:
- einer Zutatentransferkonfiguration zum Aufnehmen der Zutat (5a) durch die erste und die zweite Kapselhandhabungsvorrichtung (10,20) und/oder zum Freigeben der Zutat (5a) aus der ersten und der zweiten Zutatenhandhabungsvorrichtung (10,20); in
- einer Zutatenverarbeitungskonfiguration zum Zentrifugieren der Zutat (5a) und des Wassers durch Drehung um die Verarbeitungsachse (30'); und
- umgekehrt;
- einen Getränkedurchgang (26), z. B. eine Getränkeleitung, in Fluidverbindung mit dem Getränkeauslass (25), wobei der Durchgang (26) konfiguriert ist, um das Getränk (4) von dem Auslass (25) zu einem Getränkeausgabeauslass (54) zu leiten, wobei sich der Getränkedurchgang (26) optional entlang der Verarbeitungsachse (30') erstreckt;
- ein mit dem Getränkedurchgang (26) verknüpftes Zentrifugalventil (30) zum Steuern des Flusses und/oder des Drucks des Getränks (4) entlang des Getränkedurchgangs (26), wobei das Ventil (30) konfiguriert ist, um einen Getränkefluss und/oder Getränkedruck an einem Ventilabschnitt (26') des Durchgangs (26) zu erhöhen und zu verringern, wie zuzulassen oder zu unterbrechen, und
- einen Maschinenrahmen und/oder ein Gehäuse (40), das stationär ist, wenn das Zutatenhandhabungssystem (10,20) für die Zentrifugation gedreht wird, und das das Zutatenhandhabungssystem (10,20) trägt,
wobei das Zentrifugalventil (30) einen Ventilrahmen (300) und ein dazu relativ bewegliches Ventilteil (31,310,311) aufweist, wobei das Ventilteil (31,310,311) einen ersten Trägheitskörper (31) aufweist, der ein erstes Trägheitszentrum aufweist, das relativ zu der Verarbeitungsachse (30') versetzt ist, um durch Drehung des Ventilteils (31,310,311), z. B. radial, zu einer geschlossenen oder geöffneten Position hin bewegt zu werden, um einen Getränkefluss und/oder einen Getränkedruck entlang des Getränkedurchgangs (26) zu steuern,
**dadurch gekennzeichnet, dass** das Ventilteil (31,310,311) durch einen zweiten Trägheitskörper (310,311) betätigt wird, der ein zweites Trägheitszentrum aufweist, das relativ zu der Verarbeitungsachse (30') versetzt ist, um das Ventilteil (31,310,311) durch Drehung, z. B. radial, zu einer geschlossenen oder geöffneten Position hin zu bewegen, entgegen einer Bewegung durch den ersten Trägheitskörper (31), wobei der erste Trägheitskörper (31) und der zweite Trägheitskörper (310,311) das Ventilteil (31 310,311) bewegen, wenn das Zutatenhandhabungssystem (10,20) mit einer ersten Drehgeschwindigkeit beziehungsweise mit einer zweiten Drehgeschwindigkeit gedreht wird, wobei die erste Drehgeschwindigkeit sich von der zweiten Drehgeschwindigkeit unterscheidet.

2. Maschine nach Anspruch 1, wobei sich das Ventilteil (31,310,311) im Wesentlichen ringförmig (31') um die Verarbeitungsachse (30') und/oder im Wesentlichen radial (31"), z. B. diametral, relativ zu der Verarbeitungsachse (30') erstreckt.

3. Maschine nach Anspruch 1 oder 2, wobei das Ventilteil (31,310,311) konfiguriert ist, um sich während der Zentrifugation um die Verarbeitungsachse (30') zu drehen, wobei das Ventilteil (31,310,311) optional winkelmäßig um die Verarbeitungsachse (30') an dem drehbaren Zutatenhandhabungssystem (10,20) befestigt ist.

4. Maschine nach einem der vorstehenden Ansprüche, wobei das Ventilteil axial relativ zu der Verarbeitungsachse beweglich ist, um den Getränkefluss und/oder den Getränkedruck zu steuern.

5. Maschine nach einem der vorstehenden Ansprüche, wobei das Ventilteil (31,310,311) mit mindestens einer Rückstellfeder (33,33'), wie einer Schraubenfeder, verbunden ist, um das Ventilteil (31,310,311) in eine Federfreigabeposition zu bewegen, wobei optional der erste Trägheitskörper (31) mit einer ersten vorgespannten Rückstellfeder (33) verbunden ist und der zweite Trägheitskörper (311) mit einer zweiten vorgespannten Rückstellfeder (33') verbunden ist, z. B. durch ein Verbindungselement (310), wobei sich der erste und der zweite Trägheitskörper (31,311) z. B. radial bewegen, um die erste beziehungsweise die zweite Rückstellfeder (33,33') weiter einzuspannen, wenn das Zutatenhandhabungssystem (10,20) mit einer ersten beziehungsweise einer zweiten Drehgeschwindigkeit gedreht wird, wobei sich die erste Drehgeschwindigkeit von der zweiten Drehgeschwindigkeit unterscheidet.

6. Maschine nach einem der vorstehenden Ansprüche, wobei sich das Ventil (30) diametral und/oder ringförmig relativ zu der Verarbeitungsachse (30') erstreckt, wobei sich das Ventil (30) optional im Wesentlichen entlang einer Richtung und/oder Ebene erstreckt, die im Wesentlichen orthogonal zu der Verarbeitungsachse (30') ist und/oder einen Schwerpunkt aufweist, der im Wesentlichen auf oder an der Verarbeitungsachse (30') liegt, wobei das Ventil (30) beispielsweise eine Schwerkraftachse aufweist, die im Wesentlichen kollinear mit der Verarbeitungsachse (30') ist.

7. Maschine nach einem der vorstehenden Ansprüche, wobei der Rahmen und/oder das Gehäuse (40):
- einen Boden umfasst oder an einem solchen befestigt ist, der konfiguriert ist, um auf einer Trageoberfläche außerhalb dieser Maschine (1) zu ruhen, wenn das Zutatenhandhabungssystem (10,20) für die Zentrifugation um die Verarbeitungsachse (30') gedreht wird, z. B. einer externen Trageoberfläche, die durch eine Tischplatte ausgebildet wird, wobei die Verarbeitungsachse (30') in einem Winkel relativ zu diesem Boden in dem Bereich von 0° bis 80°, beispielsweise von 0° bis 45°, wie von 0° bis 30°, z. B. von 0° bis 15°, typischerweise von im Wesentlichen 0° steht; und/oder
- einen Motor (2) trägt, der mit dem Zutatenhandhabungssystem (10,20), beispielsweise direkt oder über ein Getriebe (3), wie mindestens einem von Riemen, z. B. Zahnriemen, Zahnrädern, z. B. Stirnrädern, und Verbindungsstangen verbunden ist.

8. Maschine nach einem der vorstehenden Ansprüche, wobei der Verarbeitungshohlraum (5) mindestens eines aufweist von:
- einem oder mehreren Kapselöffnern (24',25'), wie Kapseldurchstechern (24',25'), die mit einem oder mehreren der Getränkeauslässe (25) und der Wassereinlässe (24) verknüpft sind;
- einer Vielzahl von Getränkeauslässen (25), die an dem Verarbeitungshohlraum (5) um die zentrale Verarbeitungsachse (30') peripher angeordnet sind; und
- dem Wassereinlass (24), der an dem Verarbeitungshohlraum (5) auf oder angrenzend an der Verarbeitungsachse (30') liegt.

9. Maschine nach einem der vorstehenden Ansprüche, wobei das Ventilteil (31,310,311) ein Tor (32) verschiebt, um den Getränkefluss und/oder den Getränkedruck an einem Ventilabschnitt (26') des Durchgangs (26) zu erhöhen und zu verringern, wie zuzulassen und zu unterbrechen, wobei der Ventilabschnitt (26') optional einen Bereich (26") aufweist, der durch das Tor (32) abgedichtet werden kann.

10. Maschine nach einem der vorstehenden Ansprüche, wobei der Getränkedurchgang (26) und eine Wasserleitung (28), die zu dem mindestens einen Wassereinlass (24) führt, sich angrenzend aneinander erstrecken oder sich ineinander erstrecken, z. B. konzentrisch, wobei der Getränkedurchgang (26) optional die Wasserleitung (28) umgibt oder umgekehrt, und wobei die Wasserleitung (28) typischerweise mit mindestens eines von einer Wasserquelle, einem Wärmeaufbereiter (55), einem Wassertreiber und einem Sensor zum Erfassen einer Eigenschaft des Wassers (4') verknüpft ist.

11. Maschine nach einem der vorstehenden Ansprüche, die einen Getränkeaufbereiter (50) umfasst, der einen Aufbereitungshohlraum (51) abgrenzt, z. B. zwischen zwei Oberflächen (52,53), die relativ zueinander beweglich sind, z. B. drehend beweglich, wobei der Aufbereitungshohlraum (51) mit dem Getränkedurchgang (26) fluidisch verbunden ist, wobei der Aufbereitungshohlraum (51) konfiguriert ist, um das Getränk (4), das von dem Getränkeauslass (25) über den Getränkedurchgang (26) bereitgestellt wird, zu verfeinern, wobei das Ventil (30) beispielsweise zwischen dem Getränkeauslass (25) und dem Aufbereitungshohlraum (51) fluidisch gelegen ist.

12. Maschine nach Anspruch 11, wobei der Aufbereitungshohlraum (51) mindestens teilweise relativ zu dem Verarbeitungshohlraum (5) entlang der Verarbeitungsachse (30'), optional um eine Distanz (50') von mindestens 25 % einer gesamten axialen Länge (53') des Aufbereitungshohlraums (51), wie mindestens 50 % der axialen Länge, beispielsweise mindestens 75 % der axialen Länge versetzt ist, z. B. der Aufbereitungshohlraum (51) vollständig relativ zu dem Verarbeitungshohlraum (5) entlang der Verarbeitungsachse (30') versetzt ist.

13. System, umfassend eine Maschine (1) nach einem der vorstehenden Ansprüche und die Kapsel (5b), die die Geschmackszutat (5a) enthält.

14. Verfahren zum Zubereiten des Getränks (4) in einer Maschine (1) nach einem der Ansprüche 1 bis 12 aus der innerhalb der Kapsel (5b) bereitgestellten Geschmackszutat (5a) in die Maschine (1), das Verfahren umfassend:
- Halten und Drehen der Kapsel (5b) mit dem Handhabungssystem (10,20);
- Versorgen der Kapsel (5b) mit Wasser (4') über den Wassereinlass (24) in dem Verarbeitungshohlraum (5) und Zentrifugieren der Geschmackszutat (5a) mit dem Wasser (4') und Ausbilden des Getränks (4);
- Freigeben des Getränks (4) aus der Kapsel (5b) über den Getränkedurchgang (26); und
- Steuern des Flusses und/oder des Drucks des Getränks (4) aus der Kapsel (5b) entlang des Getränkedurchgangs (26) durch das Ventil (30), das den Ventilrahmen (300) und das dazu relativ bewegliche Ventilteil (31,310,311) aufweist, wobei das Ventilteil (31,310,311) den ersten Trägheitskörper (31) aufweist, der das erste Trägheitszentrum aufweist, das relativ zu der Verarbeitungsachse (30') versetzt ist, um durch Drehung des Ventilteils (31,310,311), z. B. radial, zu einer geschlossenen oder geöffneten Position hin bewegt zu werden, um einen Getränkefluss und/oder einen Getränkedruck entlang des Getränkedurchgangs (26) zu steuern, wobei das Ventilteil (31,310,311) durch den zweiten Trägheitskörper (310,311) betätigt wird, der ein zweites Trägheitszentrum aufweist, das relativ zu der Verarbeitungsachse (30') versetzt ist, um das Ventilteil (31,310,311) durch Drehung, z. B. radial, zu einer geschlossenen oder geöffneten Position hin zu bewegen, entgegen einer Bewegung durch den ersten Trägheitskörper (31), wobei der erste Trägheitskörper (31) und der zweite Trägheitskörper (310,311) das Ventilteil (31,310,311) bewegen, wenn das Zutatenhandhabungssystem (10,20) mit einer ersten Drehgeschwindigkeit beziehungsweise mit einer zweiten Geschwindigkeit gedreht wird, wobei die erste Drehgeschwindigkeit sich von der zweiten Drehgeschwindigkeit unterscheidet.

15. Verwendung einer Kapsel als die Kapsel (5b) für/zum:
- eine Maschine nach einem der Ansprüche 1 bis 12;
- Implementieren des Systems nach Anspruch 13; oder
- Durchführen des Verfahrens nach Anspruch 14,
wobei die Kapsel (5b):
- mit dem Handhabungssystem (10,20) gehalten und gedreht wird;
- über den Wassereinlass (24) mit dem Wasser (4') versorgt und mit dem Wasser (4') zentrifugiert wird, um das Getränk (4) auszubilden; und
- das Getränk (4) aus der Kapsel (5b) über den Getränkedurchgang (26) freigibt;
- wobei der Fluss und/oder der Druck des Getränks (4) aus der Kapsel (5b) entlang des Getränkedurchgangs (26) durch das Ventil (30) gesteuert wird, das den Ventilrahmen (300) und das dazu relativ bewegliche Ventilteil (31,310,311) aufweist, wobei das Ventilteil (31,310,311) den ersten Trägheitskörper (31) aufweist, der das erste Trägheitszentrum aufweist, das relativ zu der Verarbeitungsachse (30') versetzt ist, um durch Drehung des Ventilteils (31,310,311), z. B. radial, zu einer geschlossenen oder geöffneten Position hin bewegt zu werden, um einen Getränkefluss und/oder einen Getränkedruck entlang des Getränkedurchgangs (26) zu steuern, wobei das Ventilteil (31,310,311) durch den zweiten Trägheitskörper (310,311) betätigt wird, der ein zweites Trägheitszentrum aufweist, das relativ zu der Verarbeitungsachse (30') versetzt ist, um das Ventilteil (31,310,311) durch Drehung, z. B. radial, zu einer geschlossenen oder geöffneten Position hin zu bewegen, entgegen einer Bewegung durch den ersten Trägheitskörper (31), wobei der erste Trägheitskörper (31) und der zweite Trägheitskörper (310,311) das Ventilteil (31,310,311) bewegen, wenn das Zutatenhandhabungssystem (10,20) mit einer ersten Drehgeschwindigkeit beziehungsweise mit einer zweiten Geschwindigkeit gedreht wird, wobei die erste Drehgeschwindigkeit sich von der zweiten Drehgeschwindigkeit unterscheidet.

## Revendications

1. Machine (1) destinée à préparer une boisson (4) à partir d'un ingrédient aromatisant (5a) dans une cavité de traitement (5), telle qu'une cavité (5) pour maintenir ledit ingrédient (5a) fourni à l'intérieur d'une capsule (5b), en mélangeant ledit ingrédient (5a) avec de l'eau (4') et en entraînant par centrifugation lequel ingrédient (5a) et ladite eau (4') autour d'un axe de traitement (30') pour former ladite boisson (4), laquelle machine (1) comprenant :
- un système rotatif de manipulation d'ingrédients (10, 20) pour maintenir et faire tourner ledit ingrédient aromatisant (5a) et l'eau pendant la centrifugation autour de l'axe de traitement (30'), le système de manipulation d'ingrédients (10, 20) ayant au moins une sortie de boisson (25) et au moins une entrée d'eau (24) pour fournir ladite eau (4') audit ingrédient (5a), éventuellement le système (10, 20) ayant un premier dispositif de manipulation d'ingrédients (10) et un second dispositif de manipulation d'ingrédients (20) qui sont mobiles l'un par rapport à l'autre à partir :
- d'une configuration de transfert d'ingrédients pour recevoir ledit ingrédient (5a) par les premier et second dispositifs de manipulation de capsules (10, 20) et/ou libérer ledit ingrédient (5a) du premier et second dispositifs de manipulation d'ingrédients (10, 20) ; jusqu'à
- une configuration de traitement d'ingrédients pour centrifuger ledit ingrédient (5a) et l'eau par rotation autour de l'axe de traitement (30') ; et
- vice versa ;
- un passage de boisson (26), par exemple un conduit de boisson, en communication fluidique avec la sortie de boisson (25), le passage (26) étant conçu pour guider ladite boisson (4) de la sortie (25) vers une sortie de distribution de boisson (54), éventuellement le passage de boisson (26) s'étendant le long de l'axe de traitement (30') ;
- une soupape centrifuge (30) associée au passage de boisson (26) pour réguler l'écoulement et/ou la pression de ladite boisson (4) le long du passage de boisson (26), la soupape (30) étant conçue pour augmenter et réduire, comme permettre et interrompre, un écoulement de boisson et/ou une pression de boisson au niveau d'une partie de soupape (26') du passage (26) ; et
- un châssis de machine et/ou un boîtier (40) qui est stationnaire lorsque le système de manipulation d'ingrédients (10, 20) est tourné pour la centrifugation et qui supporte le système de manipulation d'ingrédients (10, 20),
la soupape centrifuge (30) ayant un châssis de soupape (300) et, relativement mobile par rapport à celui-ci, une pièce de soupape (31, 310, 311), la pièce de soupape (31, 310, 311) ayant un premier corps d'inertie (31) qui a un premier centre d'inertie qui est décalé par rapport à l'axe de traitement (30') pour déplacer, par exemple radialement, par rotation, la pièce de soupape (31, 310, 311) vers une position fermée ou ouverte afin de réguler un écoulement de boisson et/ou une pression de boisson le long du passage de boisson (26),
**caractérisée en ce que** la pièce de soupape (31, 310, 311) est actionnée par un second corps d'inertie (310, 311) qui a un second centre d'inertie décalé par rapport à l'axe de traitement (30') pour déplacer, par exemple radialement, la pièce de soupape (31, 310, 311) par rotation vers une position fermée ou ouverte, en opposition à un déplacement du premier corps d'inertie (31), le premier corps d'inertie (31) et le second corps d'inertie (310, 311) déplaçant la pièce de soupape (31, 310, 311) lorsque le système de manipulation d'ingrédients (10, 20) est tourné à une première vitesse de rotation et à une seconde vitesse, respectivement, la première vitesse de rotation étant différente de la seconde vitesse de rotation.

2. Machine selon la revendication 1, dans laquelle la pièce de soupape (31, 310, 311) s'étend sensiblement annulairement (31') autour de l'axe de traitement (30') et/ou sensiblement radialement (31"), par exemple diamétralement, par rapport à l'axe de traitement (30').

3. Machine selon la revendication 1 ou 2, dans laquelle la pièce de soupape (31, 310, 311) est conçue pour tourner autour de l'axe de traitement (30') pendant la centrifugation, la pièce de soupape (31, 310, 311) étant éventuellement fixée angulairement au système rotatif de manipulation d'ingrédients (10, 20) autour de l'axe de traitement (30').

4. Machine selon l'une quelconque revendication précédente, dans laquelle la pièce de soupape est mobile axialement par rapport à l'axe de traitement pour réguler ledit écoulement de boisson et/ou ladite pression de boisson.

5. Machine selon l'une quelconque revendication précédente, dans laquelle la pièce de soupape (31, 310, 311) est reliée à au moins un ressort de rappel (33, 33'), tel qu'un ressort hélicoïdal, pour déplacer la pièce de soupape (31, 310, 311) dans une position de libération de ressort, éventuellement le premier corps d'inertie (31) étant relié à un premier ressort de rappel (33) précontraint et le second corps d'inertie (311) étant relié à un second ressort de rappel (33') précontraint, par exemple par un élément de liaison (310), les premier et second corps d'inertie (31, 311) se déplaçant, par exemple radialement, pour contraindre davantage les premier et second ressorts de rappel (33, 33'), respectivement, lorsque le système de manipulation d'ingrédients (10, 20) est tourné à une première et une seconde vitesse de rotation, respectivement, la première vitesse de rotation étant différente de la seconde vitesse de rotation.

6. Machine selon l'une quelconque revendication précédente, dans laquelle la soupape (30) s'étend diamétralement et/ou annulairement par rapport à l'axe de traitement (30'), éventuellement la soupape (30) s'étendant sensiblement le long d'une direction et/ou d'un plan qui est sensiblement orthogonal à l'axe de traitement (30') et/ou ayant un centre de gravité qui est situé sensiblement sur ou au niveau de l'axe de traitement (30'), par exemple la soupape (30) ayant un axe de gravité qui est sensiblement colinéaire à l'axe de traitement (30').

7. Machine selon l'une quelconque revendication précédente, dans laquelle le châssis et/ou le boîtier (40) :
- comprend ou est fixé à un fond conçu pour reposer sur une surface de support externe à laquelle machine (1) lorsque le système de manipulation d'ingrédients (10, 20) est tourné autour de l'axe de traitement (30') pour la centrifugation, par exemple, une surface de support externe formée par un plateau de table, l'axe de traitement (30') étant à un angle par rapport auquel fond dans la plage allant de 0° à 80°, par exemple de 0° à 45°, tel que de 0° à 30°, par exemple de 0° à 15°, typiquement de sensiblement 0° ; et/ou
- supporte un moteur (2) qui est relié au système de manipulation d'ingrédients (10, 20), par exemple relié directement ou par l'intermédiaire d'une transmission (3) telle qu'au moins une des courroies, par exemple des courroies dentées, des engrenages, par exemple des engrenages droits, et des bielles.

8. Machine selon l'une quelconque revendication précédente, dans laquelle la cavité de traitement (5) a au moins un parmi :
- un ou plusieurs dispositifs d'ouverture de capsules (24', 25'), tels que des dispositifs de perçage de capsules (24', 25'), associés à une ou plusieurs des sorties de boisson (25) et à une ou plusieurs entrées d'eau (24) ;
- une pluralité de sorties de boisson (25) disposées à la périphérie de la cavité de traitement (5) autour de l'axe de traitement central (30') ; et
- l'entrée d'eau (24) située dans la cavité de traitement (5) sur ou à côté de l'axe de traitement (30').

9. Machine selon l'une quelconque revendication précédente, dans laquelle la pièce de soupape (31, 310, 311) déplace une vanne (32) pour augmenter et réduire, comme permettre et interrompre, ledit écoulement de boisson et/ou la pression de boisson au niveau d'une partie de soupape (26') du passage (26), éventuellement la partie de soupape (26') ayant une section (26") qui peut être scellée par la vanne (32).

10. Machine selon l'une quelconque revendication précédente, dans laquelle le passage de boisson (26) et un conduit d'eau (28) menant à ladite au moins une entrée d'eau (24) s'étendent de manière adjacente l'un à l'autre ou s'étendent l'un à l'intérieur de l'autre, par exemple de manière concentrique, le passage de boisson (26) entourant éventuellement le conduit d'eau (28) ou vice versa, le conduit d'eau (28) étant généralement associé à au moins une source d'eau, un conditionneur thermique (55), un conducteur d'eau et un capteur pour détecter une caractéristique de ladite eau (4').

11. Machine selon l'une quelconque revendication précédente, qui comprend un conditionneur de boisson (50) délimitant une cavité de conditionnement (51), par exemple entre deux surfaces (52,53) qui sont mobiles l'une par rapport à l'autre, par exemple mobiles en rotation, la cavité de conditionnement (51) étant reliée fluidiquement au passage de boisson (26), la cavité de conditionnement (51) étant conçue pour raffiner ladite boisson (4) fournie à partir de la sortie de boisson (25) par l'intermédiaire du passage de boisson (26), la soupape (30) étant par exemple située fluidiquement entre la sortie de boisson (25) et la cavité de conditionnement (51).

12. Machine selon la revendication 11, dans laquelle la cavité de conditionnement (51) est au moins partiellement décalée par rapport à la cavité de traitement (5) le long de l'axe de traitement (30'), éventuellement décalée d'une distance (50') d'au moins 25 % d'une longueur axiale totale (53') de la cavité de conditionnement (51), telle qu'au moins 50 % de la longueur axiale, par exemple au moins 75 % de la longueur axiale, par exemple la cavité de conditionnement (51) étant entièrement décalée par rapport à la cavité de traitement (5) le long de l'axe de traitement (30').

13. Système comprenant une machine (1) selon l'une quelconque revendication précédente et ladite capsule (5b) contenant ledit ingrédient aromatisant (5a).

14. Procédé de préparation dans une machine (1), selon l'une quelconque des revendications 1 à 12, ladite boisson (4) dudit ingrédient aromatisant (5a) étant fournie dans ladite capsule (5b) dans la machine (1), le procédé comprenant :
- le maintien et la rotation de la capsule (5b) avec ledit système de manipulation (10, 20) ;
- l'introduction de ladite eau (4') par l'intermédiaire de l'entrée d'eau (24) dans ladite capsule (5b) dans la cavité de traitement (5) et la centrifugation de l'ingrédient aromatisant (5a) avec l'eau (4') et la formation de ladite boisson (4) ;
- la libération de la boisson (4) de ladite capsule (5b) par l'intermédiaire du passage de boisson (26) ; et
- la régulation de l'écoulement et/ou de la pression de ladite capsule (5b) de ladite boisson (4) le long du passage de boisson (26) par la soupape (30) ayant le châssis de soupape (300) et, relativement mobile par rapport à celui-ci, la pièce de soupape (31, 310, 311), la pièce de soupape (31, 310, 311) ayant le premier corps d'inertie (31) qui a le premier centre d'inertie qui est décalé par rapport à l'axe de traitement (30') pour déplacer, par exemple radialement, par rotation, la pièce de soupape (31, 310, 311) vers une position fermée ou ouverte pour réguler un écoulement de boisson et/ou une pression de boisson le long du passage de boisson (26), la pièce de soupape (31, 310, 311) étant actionnée par le second corps d'inertie (310, 311) qui a un second centre d'inertie qui est décalé par rapport à l'axe de traitement (30') pour déplacer, par exemple radialement, la pièce de soupape (31, 310, 311) par rotation vers une position fermée ou ouverte, par exemple en opposition à un déplacement du premier corps d'inertie (31), le premier corps d'inertie (31) et le second corps d'inertie (310, 311) déplaçant la pièce de soupape (31, 310, 311) lorsque le système de manipulation d'ingrédients (10, 20) est tourné à une première vitesse de rotation et à une seconde vitesse, respectivement, la première vitesse de rotation étant différente de la seconde vitesse de rotation.

15. Utilisation d'une capsule de ladite capsule (5b) pour :
- une machine selon l'une quelconque des revendications 1 à 12 ;
- la mise en œuvre du système selon la revendication 13 ; ou
- la réalisation du procédé selon la revendication 14,
dans laquelle ladite capsule (5b) :
- est maintenue et tournée par ledit système de manipulation (10, 20) ;
- est alimentée avec de ladite eau (4') par l'intermédiaire de l'entrée d'eau (24) et centrifugée avec l'eau (4') de manière à former ladite boisson (4) ; et
- la libération de la boisson (4) de ladite capsule (5b) par l'intermédiaire du passage de boisson (26) ;
- l'écoulement et/ou la pression de ladite capsule (5b) de ladite boisson (4) étant régulés le long du passage de boisson (26) par la soupape (30) ayant le châssis de soupape (300) et, relativement mobile par rapport à celui-ci, la pièce de soupape (31, 310, 311), la pièce de soupape (31, 310, 311) ayant le premier corps d'inertie (31) qui a le premier centre d'inertie qui est décalé par rapport à l'axe de traitement (30') pour déplacer, par exemple radialement, par rotation, la pièce de soupape (31, 310, 311) vers une position fermée ou ouverte pour réguler un écoulement de boisson et/ou une pression de boisson le long du passage de boisson (26), la pièce de soupape (31, 310, 311) étant actionnée par le second corps d'inertie (310, 311) qui a un second centre d'inertie qui est décalé par rapport à l'axe de traitement (30') pour déplacer, par exemple radialement, la pièce de soupape (31, 310, 311) par rotation vers une position fermée ou ouverte, par exemple en opposition à un déplacement par le premier corps d'inertie (31), le premier corps d'inertie (31) et le second corps d'inertie (310, 311) déplaçant la pièce de soupape (31, 310, 311) lorsque le système de manipulation d'ingrédients (10, 20) est tourné à une première vitesse de rotation et à une seconde vitesse, respectivement, la première vitesse de rotation étant différente de la seconde vitesse de rotation.
